# EUROPEAN PATENT SPECIFICATION

(11) **EP 1 983 224 B1**
(45) Date of publication and mention of the grant of the patent: **16.05.2012**
(21) Application number: 08075284.3
(22) Date of filing: 07.04.2008
(51) Int. Cl.: F16H 55/24, F16H 1/16, B66B 23/02

(54) **Device for recovering an adjusting backlash between teeth of a gear pair, particularly for lift winches**
Vorrichtung zur Wiederherstellung einer einstellbaren Gegenbewegung zwischen den Zähnen eines Radpaars, speziell für Hebewinden
Dispositif de récupération d'un jeu de denture de réglage entre les dents d'un engrenage, particulièrement pour des treuils élévateurs

(30) Priority: 20.04.2007 IT MI20070824
(43) Date of publication of application: 22.10.2008
(73) Proprietor: Prisma S.p.A., 43055 Mezzani Località Casale (PR) (IT)
(72) Inventor: Frasca, Giovanni, 20059 Vimercate (IT)
(74) Representative: Riccardi, Sergio

(56) References cited:
- JP-A- 4 069 434
- US-A- 3 795 154
- US-A- 4 261 218

## Description

The present invention relates to a device designed for adjusting backlash existing in mating of two meshing toothed gears.

JP 4-69434 A, which forms the preamble of claim 1, discloses such a device.

The use of a device with the aforesaid function is justified every time a particular application requires a motion transmission almost lacking in oscillations. Generation of oscillations, certainly, depends on the manufacturing of the single members designed for the motion transmission but, mainly, on the accuracy level according to which such transmission members are manufactured. The manufacturing step, indeed, leads without any doubt to obtain, due to the natural inaccuracies of the machining, transmission members having dimensions differing from the ones predetermined in the design step; such manufacture inaccuracies, during the assembly step of all the transmission members, are cumulated tending to be amplified. Based on those simple comments one can realize that it is really difficult to predetermine during design step which clearance or interference coupling values there will be. Consequently it is clear that the achievement of the desired values for the member couplings could be verified only during the assembly step and adjusted by devices like the one hereinafter described according to the present invention.

The device of the present invention results particularly useful once operatively associated to an elevator or lift hoisting winch. The hoisting winch can be briefly described as a speed reducer comprising a toothed gear pair each gear being integral with a motion transmission shaft. According to the current standard in the lift installation field, the authority in charge for the examination of said plants establishes the minimum values of the backlash from the toothed gear mating in a hoisting winch. The backlash between teeth of said toothed gears must, indeed, be the minimum possible in order to assure a minimum threshold for the oscillations resulting from the mutual distance between teeth of the toothed gears and as proof of their good integrity condition. It is, in general, to be envisioned that the backlash order of magnitude is to be evaluated at some hundredths of millimeter and, in case this has not been observed, the replacement of the whole hoisting winch is prescribed.

The features and the advantages of the adjusting device according to the present invention will be clear from the following detailed disclosure, with reference to the annexed drawing, in which:
fig. 1 is a cross-sectional view of the backlash recovering device according to the present invention, and
fig. 2 is a side view of the cross-sectional view in fig. 1.

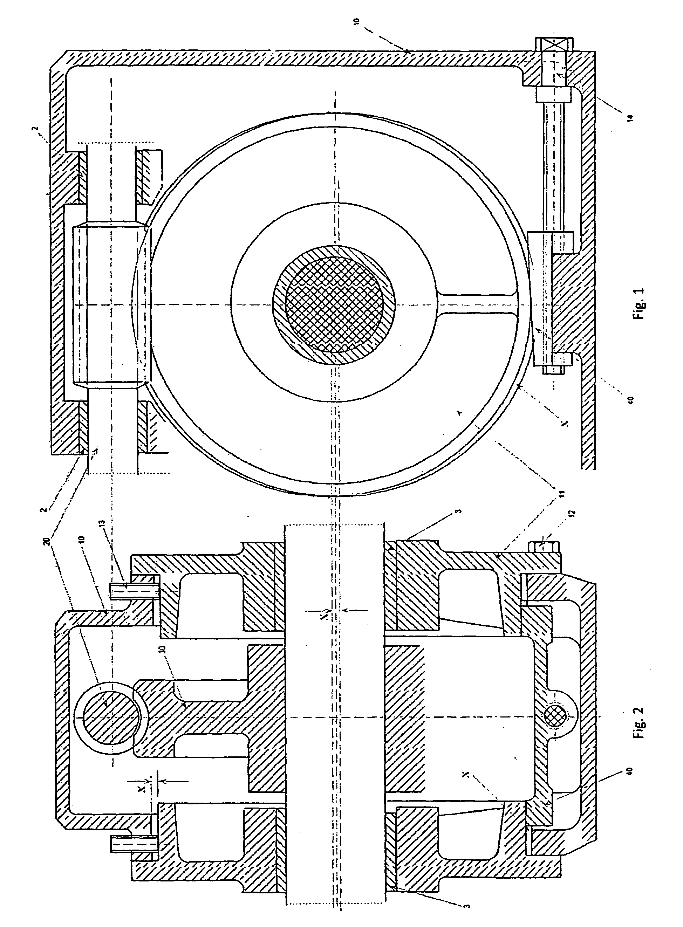

With reference now to fig. 1 and 2, the frame 10 of the speed reducer 1 is provided with a pair of seats 2 adapted to house a worm screw 20. Mounted on said frame 10 at opposite sides there is a pair of collars 11 on each of which there is a seat 3. The pair of coaxial seats 3 is adapted to house the shaft on which a helical gear 30, meshing said worm screw 20, is keyed. Each collar 11 is constrained at the corresponding seat in the frame 10, horizontally, by screws 12 and, vertically, by a screw 13. The coupling of each collar 11 with the corresponding seat is obtained with the necessary clearance in vertical direction, solution allowing the whole unit constituted by the collars 11, the corresponding seats 3 of the keying shaft of the toothed gear 30, the same toothed gear 30 for vertically sliding for a maximum quantity X. A screw 14, at the bottom of the frame 10, is free to rotate around its axis but it is constrained, in respect of the horizontal sliding, outside the frame 10 by its head and inside the frame 10 by a shoulder integral with the screw 14. Said screw 14 also engages, at the opposite end of the head, a conical slab 40 which, in turn, engages the toothed gear 30.

The adjustment of the backlash between the teeth of the toothed gear 30 and the teeth of the worm screw 20 is set, therefore, by screwing out the screws 12 and 13, so as to allow the collars 11 to slide vertically inside their elongated circular seats, and subsequently acting on the screw 14; the rotation of the screw 14 corresponds, based on the direction, to an advance or return of the conical slab 40, which due to its conical shape forces the toothed gear 30 to move up or down. Thus it is possible to approach or move away the axis of the toothed gear 30 in respect of the axis of the worm screw 20, thus adjusting the backlash of the toothed gears. At the achievement of the desired backlash for the mating considered, it will be needed to fasten the collars 11 to the frame 10 into the corresponding seats, tightening the screws 12 and 13. The accuracy according to which that adjustment can be carried out also depends on the taper ratio selected for the conical slab 40, which therefore is not a limiting factor for the illustrative embodiment in figures 1 and 2.

It is clear to a person skilled in the art that different embodiments can be devised from the present disclosure and therefore it has not to be considered in a manner limited to the above illustrated preferred embodiment. On the other hand, it is to be envisioned the possibility to form the present invention with different possible technologies and materials depending on the features considered in the particular application the device for recovering and adjusting the backlash between the teeth of a pair of toothed gears is used for.

## Claims

1. A device for recovering and adjusting backlash in a mechanical speed reducer, particularly in an elevator or lift hoisting winch comprising:
(i) a frame (10);
(ii) a worm screw (20) housed in suitable seats (2) of said frame (10);
(iii) a helical gear (30) housed in seats (3) mating said worm screw (20);
(iv) a keying shaft for said helical gear (30);
(v) **characterized by** a screw (14) able to rotate around its own axis and horizontally constrained to said frame (10), outside the frame (10) by its head and inside the frame (10) by a shoulder integral with the screw (14);
(vi) a slab (40), arranged at a diametrically opposite position of said helical gear (30) in respect of said worm screw (20), and sliding horizontally by the rotation of said screw (14) together which it is engaged; and
(vii)two supports (11) lockable on said frame (10), by suitable fastening means (12, 13), provided with seats (3) for said keying shaft of said helical gear (30)
whereby the slab (40) is provided with a taper ratio that, during sliding of said slab (40), moves up and down the unit comprising helical gear (30), keying shaft and corresponding supports (11), when said fastening means (12, 13) are not tightened, thus allowing the adjustment of the backlash being between the teeth of the toothed gears among which one is the helical gear and the other the worm screw (20).

2. The device for recovering and adjusting backlash according to claim 1, wherein said supports (11) are constituted by a pair of collars slidable in an elongated circular seat.

3. The device for recovering and adjusting backlash according to the preceding claims allowing to move up and down the supports (11) simultaneously and at the same vertical movement value.

## Patentansprüche

1. Vorrichtung zur Einstellung bzw. Wiederherstellung des Spiels eines Untersetzungsgetriebes insbesondere einer Hebewinde für Personen-bzw. Lastenaufzüge, enthaltend:
(i) ein Gestell (10);
(ii) eine Schnecke (20), die in geeigneten Sitzen (2) des Gestells (10) aufgenommen ist;
(iii)ein in Sitzen (3) aufgenommenes Schrägzahnrad (30), das mit der Schnecke (20) eingreift;
(iv)eine Verbindungswelle für das Schrägzahnrad (30);
(v) eine Schraube (14), die um ihre Achse drehen kann und an das Gestell (10) waagerecht gebunden ist, ausserhalb des Gestells durch ihren Kopf und innerhalb des Gestells durch einen mit der Schraube (14) einteiligen Bund;
(vi)eine Platte (40), die mit dem Schrägzahnrad (30) an einer der Schnecke (20) diametral entgegengesetzten Stellung eingreift und durch die Umdrehung der mit der Platte eingreifenden Schraube (14) waagerecht gleitet; und
(vii) zwei Halterungen (11), die durch geeignete Befestigungsmittel (12, 13) an das Gestell (10) festgeklemmt werden können, und diese Befestigungsmittel (12, 13) Sitzen (3) für die Verbindungswelle des Schrägzahnrads (30) aufweisen,
worin die Platte (40) einen Kegel hat, der der beim Gleiten der Platte den aus dem Schrägzahnrad (30), Verbindungswellen und entsprechenden Halterungen (11) bestehenden Block hebt bzw. senkt, wenn die Befestigungsmittel (12, 13) nicht gespannt sind, um die Einstellung des Spiels zwischen den Zähnen des aus dem Schrägzahnrad (30) und der Schnecke (20) bestehenden Radpaars zu gestatten.

2. Vorrichtung zur Einstellung bzw. Wiederherstellung des Spiels nach Anspruch 1, **dadurch gekennzeichnet, dass** die Halterungen (11) aus einem Paar Flanschen bestehen, die in einem ausgedehnten kreisförmigen Sitz gleiten.

3. Vorrichtung zur Einstellung bzw. Wiederherstellung des Spiels nach einem der voranstehenden Ansprüche, **dadurch gekennzeichnet, dass** die Vorrichtung gestattet, die Halterungen (11) gleichzeitig und mit dem selben Wert senkrechter Verschiebung zu heben bzw. senken.

## Revendications

1. Dispositif de réglage et récupération d'un jeu de denture dans un réducteur mécanique de vitesse, particulièrement dans des treuils élévateurs pour ascenseurs ou monte-charge, comprenant:
(i) un châssis (10);
(ii) une vis sans fin (20) logée dans des sièges (2) appropriés du dit châssis (10);
(iii)une roue (30) à dents hélicoïdales logée dans des sièges (3) et accouplée à la vis sans fin (20) susdite;
(iv)un arbre d'embrèvement pour la dite roue (30) à dents hélicoïdales; **caractérisé par**:
(v) une vis (14) avec possibilité de rotation autour de son axe et engagée horizontalement au dit châssis (10), à l'extérieur du châssis par sa tête et à l'intérieur du châssis par une épaule en pièce unique avec la vis (14);
(vi)une plaque (40) engageant la dite roue (30) à dents hélicoïdales en position diamétralement opposée à la dite vis (14), avec laquelle la plaque est engagée; et
(vii) deux supports (11) bloquables au dit châssis (10) par moyens de fixage (12, 13) appropriés, munis des sièges (3) pour le dit arbre d'embrèvement pour la dite roue (30) à dents hélicoïdales,
dont la plaque (40) a une conicité qui, lors du coulissement de la plaque (40), lève/baisse le groupe formé par la roue (30) à dents hélicoïdales, l'arbre d'embrèvement avec les supports (11) rélatifs, lorsque les moyens de fixage (12, 13) ne sont pas bloqués, permettant ainsi le réglage du jeu de denture entre les dents d'engranage dont le un est la roue hélicoïdale (30) et l'autre la vis sans fin (20).

2. Dispositif de réglage et récupération d'un jeu de denture selon la revendication 1, dont les dits supports (11) sont formés par une paire des brides coulissant dans une siège circulaire allongé.

3. Dispositif de réglage et récupération d'un jeu de denture selon les revendications précédentes, dont le dispositif permet de lever/baisser les supports (11) simultanément et avec la même valeur de déplacement vertical.
